# EUROPEAN PATENT APPLICATION

(11) **EP 2 405 319 A1**
(43) Date of publication of application: **11.01.2012**
(21) Application number: 10006921.0
(22) Date of filing: 05.07.2010
(51) Int. Cl.: G06F 1/16

(54) **Monitor protection device for a flat panel display**

(71) Applicant: Aevoe incorporated, Taipei (TW)
(72) Inventor: Huang, Cheng-Su, Songshan District Taipei City (TW)
(74) Representative: Görz, Ingo

(57) **Abstract**

A monitor protection device for a flat panel display includes a transparent hard board, and a bonding film formed around the transparent hard board, including a first plane sticking around the transparent hard board, and a second plane for being pasted with the flat panel display. When the second plane of the bonding film is pasted with the flat panel display, a space is formed between the transparent hard board and the bonding film.

## Description

### Background of the Invention

### 1. Field of the Invention

The present invention relates to a monitor protection device for a flat panel display, and more particularly, to a monitor protection device capable of protecting a monitor from being scratched, effectively resolving a bubble generation issue, and enhancing aesthetics and image quality.

### 2. Description of the Prior Art

Flat panel displays, such as liquid crystal displays (LCDs), plasma display panels (PDPs), light-emitting diode (LED) displays, have merits such as low radiation, compact size and low power consumption, and thus have been widely used in TVs, computer systems, personal digital assistants (PDAs), or mobile phones. Compared with hard glass monitors of conventional cathode ray tube (CRT) displays, panels of flat panel displays are formed by softer materials, whose surface hardness is substantially 2H in Rockwell Hardness, in which 1H is softest, 10H is hardest, and thus are likely to be scratched by other harder objects.

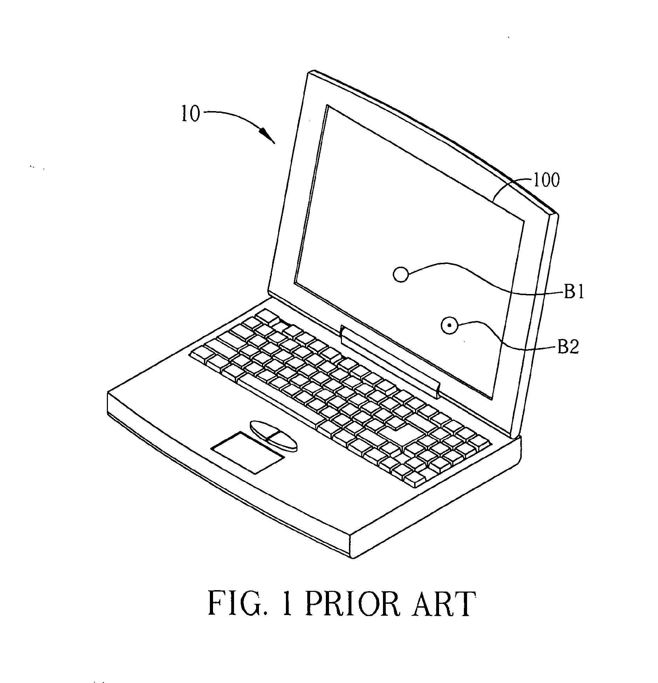

In order to prevent a flat panel display to be scratched, a user can paste a monitor surface with a protection layer. For example, please refer to FIG. 1, which is a schematic diagram of a conventional laptop 10. A monitor surface of the laptop 10 is pasted with a protection layer 100, for preventing the monitor surface from being scratched by hard objects. In the prior art, the protection layer 100 is a soft material, and has an adhesive plane, for being pasted with the monitor surface of the laptop 10. However, during a process of pasting the protection layer 100 with the monitor surface of the laptop 10, if the protection layer 100 is not closely pasted with the monitor surface and thus air is not expelled completely, a bubble B1 will be generated. If the monitor surface is not clean and with dust, a bubble B2 will be generated. These bubbles are unaesthetic, and affect transmittance of the monitor, causing inequality in display images. More importantly, no matter how the pasting process is improved, these bubbles are still generated during the pasting process.

Therefore, how to improve the conventional protection layer to prevent bubbles from being generated has become an issue in the industry.

### Summary of the Invention

It is therefore an objective of the present invention to provide a monitor protection device for a flat panel display.

The present invention discloses a monitor protection device for a flat panel display. The monitor protection device includes a transparent hard board, and a bonding film, formed around the transparent hard board, comprising a first plane, sticking around the transparent hard board, and a second plane, for being pasted with the flat panel display. A space is formed between the transparent hard board and a monitor of the flat panel display when the second plane being of the bonding film is pasted with the flat panel display.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a conventional laptop.

FIG. 2A is a schematic diagram of a monitor protection device according to an embodiment of the present invention.

FIG. 2B and FIG. 2C are schematic diagrams of assembling the monitor protection device in FIG. 2A with a flat panel display.

### Detailed Description

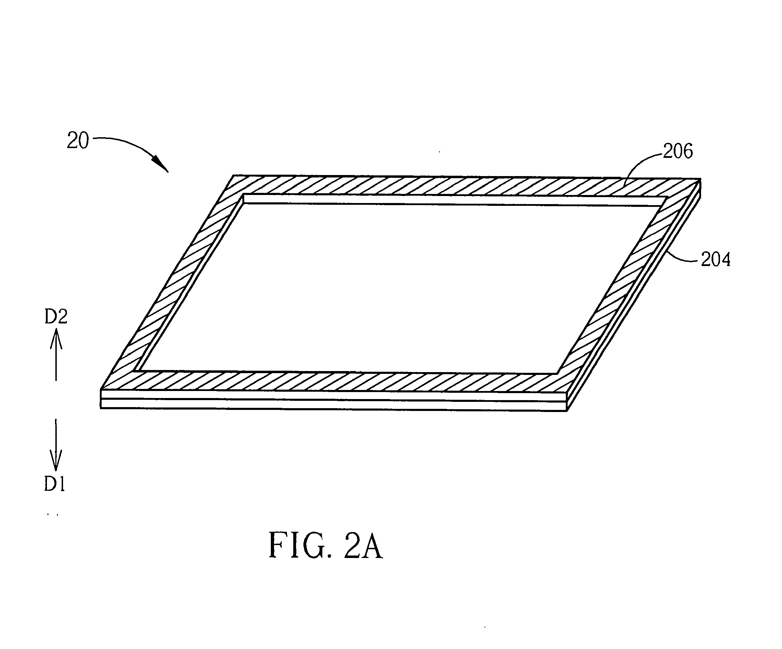

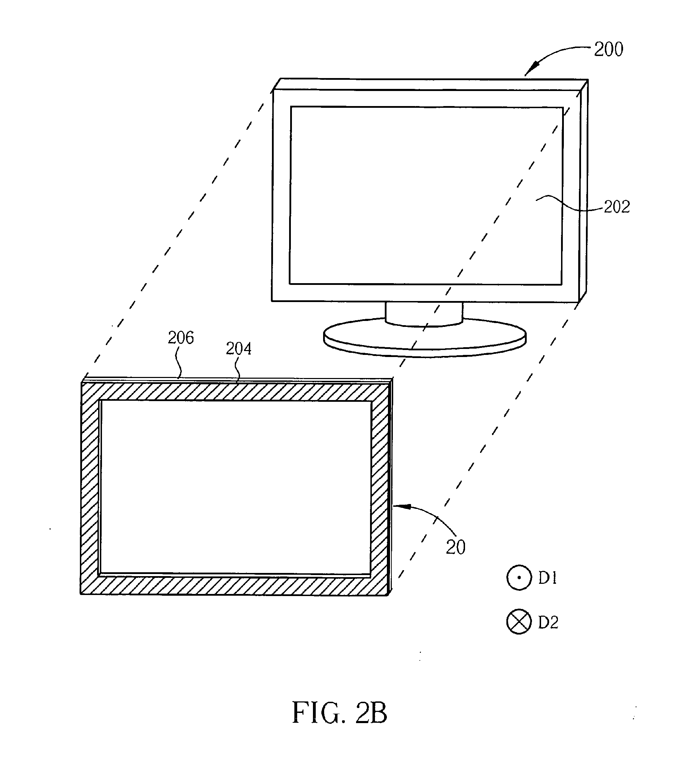

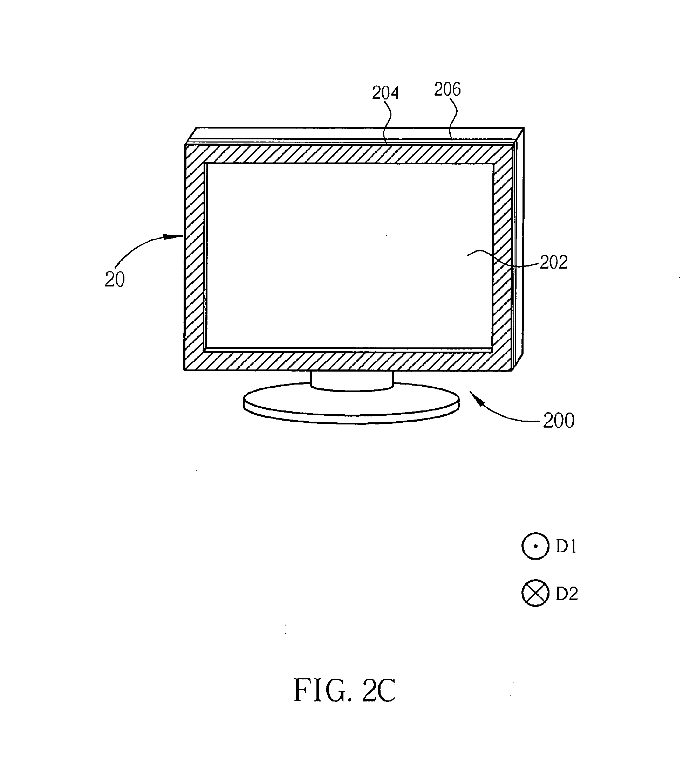

Please refer to FIG. 2A to FIG. 2C. FIG. 2A is a schematic diagram of a monitor protection device 20 according to an embodiment of the present invention, and FIG. 2B and FIG. 2C are schematic diagrams of assembling the monitor protection device 20 with a flat panel display 200. For clearly illustrating an assembly process for the monitor protection device 20, directions D1, D2 denote two opposite directions in FIG. 2A to FIG. 2C, whereas "." denotes the direction D1 which is toward a reader, while "x" denotes the direction D2 which is away from the reader. The monitor protection device 20 protects a monitor 202 of the flat panel display 200, and includes a transparent hard board 204 and a bonding film 206. The transparent hard board 204 is formed by a transparent and non-adhesive material with high hardness, for preventing the monitor 202 from being scratched by hard objects. The bonding film 206 is formed around the transparent hard board 204, and includes a plane sticking to or fixed on the transparent hard board 204, and another plane for being pasted with the flat panel display 200.

In short, the transparent hard board 204 is greater than the monitor 202, and is preferably equal to or substantially smaller than the flat panel display 200, while the bonding film 206 is formed around an area of the transparent hard board 204 outside of the monitor 202. Therefore, as shown in FIG. 2B and FIG. 2C, when the monitor protection device 20 is installed on the flat panel display 200, the present invention pastes the bonding film 206 with an area of the flat panel display 200 outside of the monitor 202. In such a situation, by utilizing thickness of the bonding film 206 and hardness of the transparent hard board 204, there is a gap between the monitor 202 and the transparent hard board 204, so as to form a space, which is preferably a closed space. In other words, the monitor 202 is not pasted with the transparent hard board 204, so as to prevent a bubble generation issue in the prior art, and prevent dust or dirt from entering the closed space.

In the prior art, the monitor protection layer is pasted with the monitor surface, which is likely to generate bubbles and thus causes unaesthetic and inequality in display images. In comparison, the present invention does not paste the monitor 202 with any material, and instead utilizes support of the transparent hard board 204 and thickness of the bonding film 206, to form the closed space between the transparent hard board 204 and the monitor 202, so as to prevent bubbles from being generated and effects of dust or dirt. Therefore, the present invention can protect the monitor 202 from being scratched by hard objects, and more importantly, the present invention can effectively resolve a bubble generation issue, so as to enhance aesthetics and image quality.

Noticeably, FIG. 2A to FIG. 2C are only schematic diagrams according to an embodiment of the present invention, and those skilled in the art should readily make modifications and alterations accordingly. For example, the flat panel display 200 can be liquid crystal displays (LCDs), plasma display panels (PDPs), light-emitting diode (LED) displays, etc., and can be display devices of TVs, computer systems, personal digital assistants (PDAs) as well. Besides, the material of the transparent hard board 204 is not limited to a specific material, as long as the material is hard and transparent. The "hard material" described in the present invention does not mean a hard and unbendable material, and instead means higher hardness of the transparent hard board 204, such that the transparent hard board 204 is less bended. In addition, the transparent hard board 204 can be coated with coating for different purposes, such as a matte effect, an anti-ultraviolet effect, etc. Similarly, the material of the bonding film 206 is not limited to a specific material, as long as one plane of the bonding film 206 can stick with the transparent hard board 204, and another plane of the bonding film 206 can be pasted with the flat panel display 200. The plane of the bonding film 206 being pasted with the flat panel display 200 is preferably formed by a reusable adhesive material, an adhesive material (such as a rubber), a magnetic material, etc. , and which is not limited to these.

To sum up, the present invention does not paste the monitor with any material, and instead utilizes support of the transparent hard board and thickness of the bonding film, to form the closed space between the transparent hard board and the monitor, so as to prevent bubbles from being generated and effects of dust or dirt. Therefore, the present invention can protect the monitor from being scratched by hard objects, and more importantly, the present invention can effectively resolve a bubble generation issue, so as to enhance aesthetics and image quality.

Those skilled in the art will readily observe that numerous modifications and alterations of the device and method may be made while retaining the teachings of the invention.

## Claims

1. A monitor protection device for a flat panel display, comprising:
a transparent hard board; and
a bonding film, formed around the transparent hard board, comprising a first plane, sticking around the transparent hard board, and a second plane, for being pasted with the flat panel display;
wherein a space is formed between the transparent hard board and a monitor of the flat panel display when the second plane being of the bonding film is pasted with the flat panel display.

2. The monitor protection device of claim 1, wherein a plane of the transparent hard board opposite to the bonding film is further coated with a coating.

3. The monitor protection device of claim 2, wherein the coating is utilized for generating a matte effect.

4. The monitor protection device of claim 2 or 3, wherein the coating is utilized for generating an anti-ultraviolet effect.

5. The monitor protection device of any one of claims 1 to 4, wherein the second plane of the bonding film is formed by a reusable adhesive material.

6. The monitor protection device of any one of claims 1 to 4, wherein the second plane of the bonding film is formed by an adhesive material.

7. The monitor protection device of any one of claims 1 to 4, wherein the second plane of the bonding film is formed by a magnetic material.

8. The monitor protection device of any one of claims 1 to 7, wherein the transparent hard board is greater than the monitor of the flat panel display.

9. The monitor protection device of claim 8, wherein the bonding film is formed around an area of the transparent hard board outside of the monitor.

10. The monitor protection device of any one of claims 1 to 9, wherein the space is a closed space.
